# EUROPEAN PATENT APPLICATION

(11) **EP 1 708 012 A1**
(43) Date of publication of application: **04.10.2006**
(21) Application number: 06110688.6
(22) Date of filing: 06.03.2006
(51) Int. Cl.: G02C 5/22

(54) **Elastic hinge for eyeglasses**

(30) Priority: 31.03.2005 IT PD20050089
(71) Applicant: Visottica Industrie S. P. A., 31058 Susegana TV (IT)
(72) Inventor: Montalban, Rinaldo, 30100, VENEZIA (IT)
(74) Representative: Modiano, Micaela Nadia

(57) **Abstract**

An elastic hinge for eyeglasses with temples made of plastics to be provided with a core, in which the core is associated at the end with the hinge, the hinge comprising: a box-shaped body (12), which is open at one end; a first hinge articulation element (13), which is arranged so that it can slide in a guided manner partially within the box-shaped body (12); an elastic mechanism (16), which is associated with the first hinge articulation element (13) and is arranged within the box-shaped body (12) so as to contrast the exit movement of the first hinge articulation element (13) from the box-shaped body (12); a second hinge articulation element (18), to be fixed to the front (19) of the eyeglasses. The box-shaped body (12) is formed monolithically with the core (14) adapted to be contained in the temple (11) of the eyeglasses. The core (14) protrudes from the opposite end of the box-shaped body (12) with respect to the open end. The box-shaped body has, at the open end, a guiding portion (21), for the first hinge articulation element (13), which lies above the portion (22) of the box-shaped body (12) which forms the receptacle of the elastic element (15). The guiding portion (21) forms externally an abutment shoulder (23) for the corresponding temple (11) of the eyeglasses in which the core (14) is to be inserted monolithically with the box-shaped body (14); the height of the shoulder (23) determines the upper limit of the depth of the embedding in the temple (11) for the guiding portion (21). Two stable positions, respectively for closing and opening on the front (19) of the eyeglasses, and an overtravel movement are associated with the hinge (10).

## Description

The present invention relates to an elastic hinge for eyeglasses with temples made of plastics to be provided with a core, wherein the core is associated with the hinge at its end.

Plastics eyeglasses have been now known for many years.

Among the various plastics which can be used, acetate is considered particularly valuable, since it has high-level aesthetic qualities, including the particular color ranges that can be associated with it.

The frames of eyeglasses made of plastics such as acetate (or other similar ones) are generally produced by machining preformed sheets.

The temples are generally produced starting from a sheet of acetate which is suitably cut so as to obtain the intended shape.

The core forming step is then performed and comprises the longitudinal insertion, in the heated temple, of a metallic core; this operation occurs by means of a tool known as core pusher, which in practice is a pad which is associated with the core at the end and allows to push it into the temple.

Hinges of the elastic type can also be associated with acetate eyeglasses.

In a first solution, the core with which the hinge is associated is compressed at its end so as to obtain a flat portion.

A box-shaped body which is open at one end is welded onto said flat portion.

A first hinge articulation element is arranged slidingly and in a guided manner (in order to avoid torsions) partially within said box-shaped body.

An elastic element is associated with the first hinge articulation element, is arranged inside the box-shaped body and is adapted to contrast the exit movement of the first hinge articulation element from said box-shaped body.

A second hinge articulation element to be fixed to the front of the eyeglasses is hinged to the first hinge articulation element.

This type of hinge can also be of the type which has two stable positions, in which the temples are respectively open and closed onto the front, such positions being obtained by means of an appropriate cam-like shaping of the articulation head (of the female type) of the second hinge articulation element, which interacts by sliding with the edge of the opening of the box-shaped body from which the first hinge articulation element protrudes; an elastic overtravel movement is associated with the two stable positions.

The trend of the eyeglass market, including eyeglasses made of acetate or the like (i.e., with temples to be provided with a core after preforming), is to reduce the dimensions of the hinge to make it as inconspicuous as possible, for purely aesthetic reasons; the need of eyeglass manufacturers is to visually limit the "technical" parts also for reasons related to recovering space on the eyeglasses in order to make any decorative or distinctive markings stand out.

In the above-mentioned solution, the assembly constituted by the box-shaped body welded to the core is large, and in particular the height of the box-like body adds to the thickness of the flat portion of the core on which it is welded.

For this reason, the box-shaped body protrudes considerably, practically along its entire extension, from the external surface of the temple in which it is inserted, making the hinge highly visible.

One solution which attempts to solve this problem provides the core, at the end with which the hinge is to be associated, with an enlarged portion, which is machined at the front so as to form a slot for accommodating the first hinge articulation element with the associated elastic element.

This structure has reduced dimensions and the core thus provided is pushed into the preformed temple until the rim of the opening of the slot of the enlarged portion is completely surrounded, said rim having to remain free for the movement of the first hinge articulation element.

The fact that the rim of the opening of the slot of the enlarged portion is small and is completely surrounded by the plastic material of the temple causes this type of hinge to be unable to have stable opening and closure positions.

Any cam-like articulation head in fact would not have, with this solution, an adapted sliding surface on the corresponding box-shaped body, since said sliding surface would be extremely small.

The aim of the present invention is to provide an elastic hinge for eyeglasses with temples made of plastics to be provided with a core, in which the core is associated at the end with said hinge, which solves the problems found in known types.

Within this aim, an object of the present invention is to provide an elastic hinge for eyeglasses with temples made of plastics to be provided with a core, in which the core is associated at the end with said hinge, which has reduced dimensions and has stable opening and closure positions in association with an overtravel movement.

Another object of the present invention is to provide an elastic hinge for eyeglasses with temples made of plastics to be provided with a core, in which the core is associated at the end with said hinge, which is scarcely visible in the matrix of the frame of the eyeglasses.

Another object of the present invention is to provide an elastic hinge for eyeglasses with temples made of plastics to be provided with a core, in which the core is associated at the end with said hinge, which is compact but at the same time particularly strong.

Another object of the present invention is to provide an elastic hinge for eyeglasses which allows to increase the space available on the eyeglasses in order to make decorative or distinctive markings stand out.

Another object of the present invention is to provide an elastic hinge for eyeglasses with temples made of plastics to be provided with a core, in which the core is associated at the end with said hinge, which can be manufactured with known systems and technologies.

This aim and these and other objects, which will become better apparent hereinafter, are achieved by an elastic hinge for eyeglasses with temples made of plastics to be provided with a core, in which the core is associated at the end with said hinge, which comprises:
- a box-shaped body, which is open at one end,
- a first hinge articulation element, which is arranged so that it can slide in a guided manner partially within said box-shaped body,
- an elastic mechanism, which is associated with said first hinge articulation element, is arranged within said box-shaped body and is adapted to contrast the exit movement of said first hinge articulation element from said box-shaped body, said elastic mechanism allowing an overtravel movement for the hinge,
- a second hinge articulation element to be fixed to the front of the eyeglasses,
said hinge being characterized in that said box-shaped body is formed monolithically with the core to be inserted in the temple of the eyeglasses, said core protruding from the opposite end of said box-shaped body with respect to the open end, said box-shaped body having, at said open end, a guiding portion, for said first hinge articulation element, which lies above the portion of the box-shaped body which forms the receptacle of the elastic mechanism, said guiding portion forming externally an abutment shoulder for the corresponding temple of the eyeglasses in which said core is to be inserted monolithically with said box-shaped body, the height of said shoulder determining the upper limit of the depth of the embedding in the temple for said guiding portion, two stable positions, respectively for closing and opening on the front of the eyeglasses, and said overtravel movement being associated with said hinge.

Further characteristics and advantages of the invention will become better apparent from the following detailed description of a preferred but not exclusive embodiment thereof, illustrated by way of non-limiting example in the accompanying drawings, wherein:

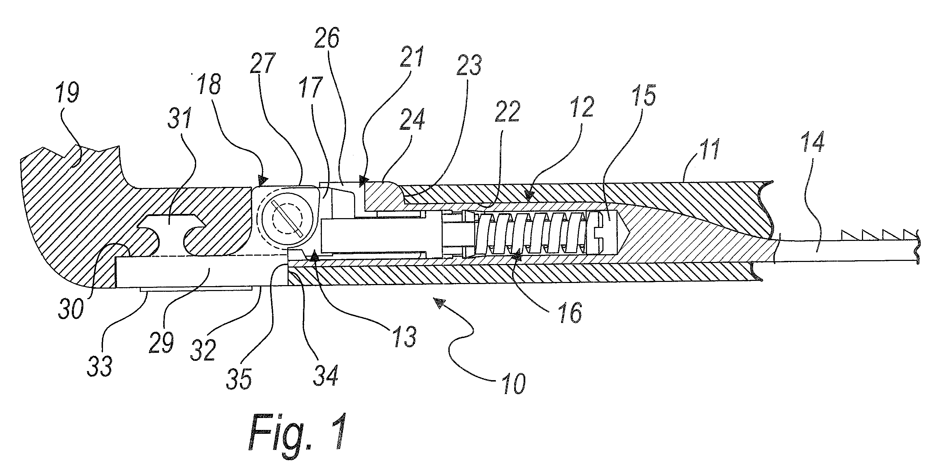

Figure 1 is a longitudinal sectional view of a portion of a pair of eyeglasses, which illustrates the inside of a hinge according to the invention, rigidly coupled to the front and to a corresponding temple;

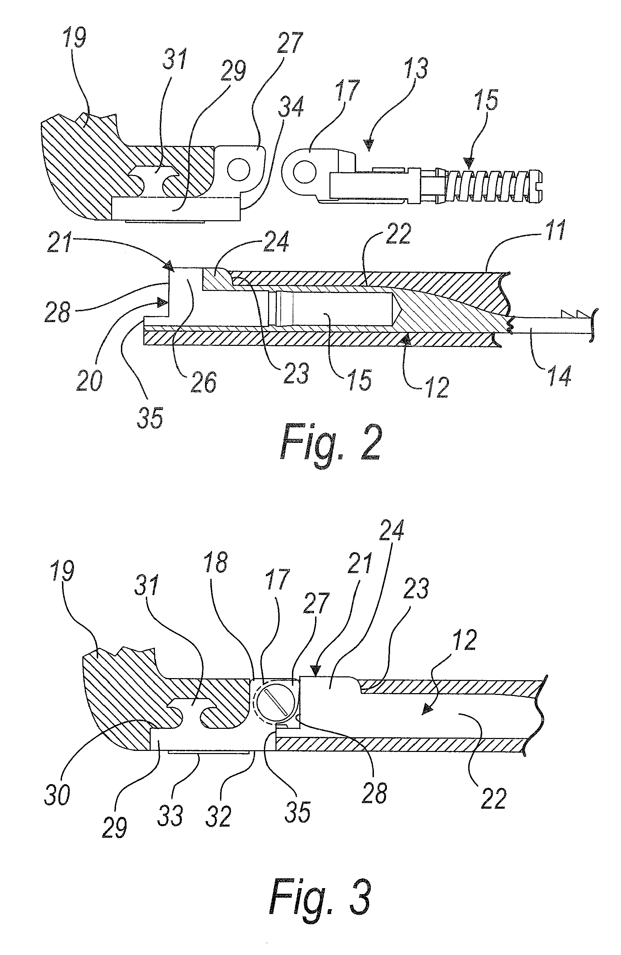

Figure 2 is an exploded view of Figure 1;
Figure 3 is a longitudinal sectional view of a portion of eyeglasses, illustrating the outside of the hinge of Figure 1;

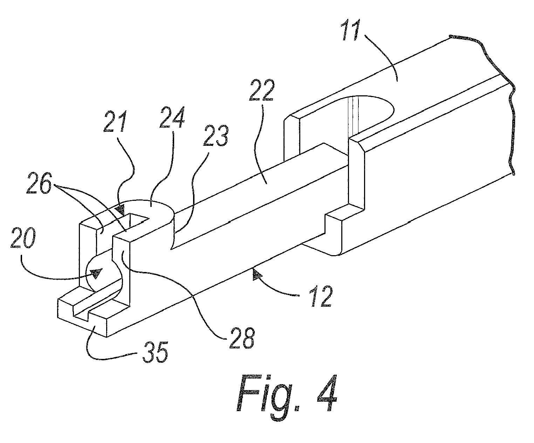

Figure 4 is a perspective view of the box-shaped body which is monolithic with the core of a hinge according to the invention, during the step for insertion in the corresponding temple.

With reference to the figures, an elastic hinge for eyeglasses according to the invention is generally designated by the reference numeral 10.

The elastic hinge 10 is for example of the type to be associated with eyeglasses having temples made of plastics to be provided with a core by hot insertion of cores, with which said hinge is associated at the end.

In this embodiment, the elastic hinge 10 is associated with a temple 11 made of plastics, such as preferably acetate.

The elastic hinge 10 comprises a box-shaped body 12, which is open at one end and in which a first hinge articulation element 13 is partially inserted so that it is guided slidingly.

Advantageously, the box-shaped body 12 is formed monolithically with the core 14 of the acetate temple with which the hinge is associated.

The core 14 protrudes from the end of the box-shaped body 12 which lies opposite the opening of said box-shaped body.

The box-shaped body 12 with a core 14 is provided for example by coining from a steel plate and by subsequent chip-forming machining in order to provide the receptacle 15 of the box-shaped body 12 in which the first hinge articulation element 13 is inserted.

The elastic mechanism of the hinge is of a substantially known type and is generally designated by the reference numeral 16.

The elastic mechanism 16 is adapted to contrast the movement for the exit of the first hinge articulation element 13 from the box-shaped body 12.

The first hinge articulation element 13 has, at one end, a corresponding male articulation head 17.

A second hinge articulation element 18 is hinged to the articulation head 17 of the first hinge articulation element 13 and is fixed to a front 19 of a pair of eyeglasses.

The box-shaped body 12 has, at an open end 20, from which the first hinge articulation element 13 protrudes, a guiding portion 21 for the first hinge articulation element 13.

Advantageously, the guiding portion 21 lies above a portion 22 of the box-shaped body 12 in which the receptacle of the elastic mechanism 16 is formed.

The guiding portion 21 forms externally an abutment shoulder 23 for the corresponding temple 11 of the eyeglasses in which the core 14 is to be inserted monolithically with the box-shaped body 12; the height of the shoulder 23 determines the upper limit of the depth of embedding in the temple 11 for the guiding portion 21.

In particular, the guiding portion 21 is constituted by a protrusion 24, which protrudes from the portion 22 of the box-shaped body 12 in which the receptacle of the elastic mechanism 16 is provided; a pocket is formed on the protrusion 24 and is open both in the direction of the sliding of the first hinge articulation element 13 and at right angles to the sliding direction and to the axis of the hinge.

Said pocket forms two parallel guiding walls 26 for the articulation head 17 of the first hinge articulation element 13 (only one wall is shown in the figures, the other one is mirror-symmetrical with respect to the sectional plane).

As shown in the figures, the protrusion 24 protrudes slightly with respect to the matrix of plastic material of the temple 11.

It is optionally possible to embed the protrusion 24 in the plastic matrix of the temple 11 up to the upper edge of the pocket which forms, as mentioned earlier, the upper limit of the depth of embedding in the temple 11 for the protrusion 24 (and therefore for the guiding portion 21).

The second hinge articulation element 18 has a parallel pair of corresponding female articulation heads 27 (only one is visible in the figures; the second one is mirror-symmetrical with respect to the sectional plane), which are arranged so as to form a fork in which the articulation head 17 of the first hinge articulation element 13 is to be arranged.

The corresponding articulation heads 27 of the second hinge articulation element 18 are shaped like a cam and interact by sliding with the surface of the end edge 28 of the box-shaped body 12, so as to form two stable positions, respectively a closed position and an open position, for the temple 11 with respect to the front 19 of the eyeglasses.

This type of hinge also allows an overtravel movement, of a per se known type, which is not shown in the figures.

Advantageously, the second hinge articulation element 18 is of the type embedded in plastic material and is constituted by a plate 29, from a first face 30 of which two tabs 31 protrude (only one is visible in the figures; the second one is mirror-symmetrical with respect to the sectional plane) for anchoring to the plastic material which forms the front 19 of the eyeglasses.

Moreover, the corresponding cam-shaped articulation heads 27 protrude from the first face 30 of the plate 29 and are hinged to the articulation head 17 of the first hinge articulation element 13.

The second face 32 of the plate 29, which lies opposite the first face 30, is directed outward with respect to the internal hinge angle formed by the plate 29 and by the first hinge articulation element 13.

In this manner, it is possible to arrange visibly on the front 19 the plate 29 in order to allow any distinctive and/or decorative markings stamped or provided on the second face 32 to be visible.

For example, in the figures such distinctive and/or decorative markings are formed by a relief 33 which is formed on the second face 32.

Likewise, such distinctive and/or decorative markings can be provided by incision or by molding or by means of another reproduction technique.

In this second embodiment, the second face 32 is at the same level as the plastic matrix which forms the front 19.

In other embodiments, not shown in the figures, the plate 29 can be embedded completely in the matrix of a substantially transparent plastics, so as to allow to see any distinctive and/or decorative markings provided on the second face 32.

Advantageously, the corresponding end border 34 of the plate 29 related to the region from which the corresponding cam-shaped articulation heads 27 protrude constitutes, when the temple 11 is open onto the front 19, an abutment for an abutment surface 35, which is formed on the first hinge articulation element 13; when moved to the overtravel position, the temple 11 pivots with the abutment surface 35 against the end border 34.

In practice it has been found that the invention thus described solves the problems noted in known types of elastic hinge for eyeglasses with temples made of plastics to be provided with a core by hot insertion of cores; in particular, the present invention provides an elastic hinge which has a box-shaped body with reduced dimensions, since with respect to known structures produced by welding the box-shaped bodies to the cores it does not have, along its height, the part of material that is adapted to constitute the bottom and top of said box-shaped body.

The only part that is visible, and to a minimal extent, is the end part of the protrusion 24, which forms the guiding portion of the articulation head 17 of the first hinge articulation element 13.

This type of construction of the box-shaped body 12 allows to provide an end edge 28 of said box-shaped body 12 whose dimensions are large enough to allow interaction with the additional cam-shaped articulation heads 27 of the second hinge articulation element 18, so as to allow stable opening and closure positions of the temples with respect to the front and the corresponding overtravel movement.

Moreover, the present invention provides an elastic hinge for eyeglasses which allows to show distinctive and/or decorative markings, forming new visible surfaces.

This has been achieved by turning through 180° the plate from which the articulation heads and the anchoring tabs of the second hinge articulation element protrude with respect to hinges of the known type, thus exposing a surface which is useful for the arrangement of said markings.

It should be noted that the hinge described here can also be used if the temple is injected in a mold on the core.

The invention thus conceived is susceptible of numerous modifications and variations, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2005A000089 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An elastic hinge for eyeglasses with temples made of plastics to be provided with a core, in which the core is associated at the end with said hinge, comprising:
- a box-shaped body (12), which is open at one end,
- a first hinge articulation element (13), which is arranged so that it can slide in a guided manner partially within said box-shaped body (12),
- an elastic mechanism (16), which is associated with said first hinge articulation element (13), is arranged within said box-shaped body (12) and is adapted to contrast the exit movement of said first hinge articulation element (13) from said box-shaped body (12), said elastic mechanism (16) allowing an overtravel movement for the hinge,
- a second hinge articulation element (18) to be fixed to the front (19) of the eyeglasses,
said hinge (10) being **characterized in that** said box-shaped body (12) is formed monolithically with the core (14) adapted to be contained in the temple (11) of the eyeglasses, said core protruding from the opposite end of said box-shaped body (12) with respect to the open end, said box-shaped body (12) having, at said open end, a guiding portion (21), for said first hinge articulation element (13), which lies above the portion (22) of the box-like body (12) which forms the receptacle of the elastic mechanism (16), said guiding portion (21) forming externally an abutment shoulder (23) for the corresponding temple (11) of the eyeglasses in which said core (14) is to be inserted monolithically with said box-shaped body (12), the height of said shoulder (23) determining the upper limit of the depth of embedding in the temple (11) for said guiding portion (21), two stable positions, respectively for closing and opening on the front (19) of the eyeglasses, and said overtravel movement, being associated with said hinge (10).

2. The elastic hinge according to claim 1, **characterized in that** said guiding portion (21) is constituted by a protrusion (24), which protrudes from said portion (22) of the box-shaped body (12), on which there is a pocket which is open both in the direction of the sliding of the first hinge articulation element (13) and in a direction which lies at right angles to said sliding direction and to the hinge axis, said pocket forming two guiding walls (26) for the articulation head (17) of said first hinge articulation element (13).

3. The elastic hinge according to claim 1 or 2, **characterized in that** said second hinge articulation element (18) has at least one corresponding articulation head (27), which is cam-shaped and interacts with the surface of the end edge (28) of said box-shaped body (12).

4. The elastic hinge according to one or more of the preceding claims, **characterized in that** said second hinge articulation element (18) is of the type embedded in plastics and is constituted by a plate (29), from a first face (30) of which there protrudes at least one tab (31) for anchoring to the plastics which forms the front (19) of the eyeglasses, at least one corresponding articulation head (27) further protruding from said first face (30) of said plate (29) and being hinged to the articulation head of said first hinge articulation element (13), the second face (32) of said plate (29), arranged opposite said first face (30), being directed outward with respect to the internal hinge angle formed by said plate (29) and by said first hinge articulation element (13), said second face (32) being arrangeable so that it is visible on said front (21) in order to allow any distinctive and/or decorative markings stamped or provided on said second face (32) to be visible.

5. The elastic hinge according to claim 4, **characterized in that** the end edge (34) of said plate (29) related to the region from which said at least one articulation head (27) protrudes constitutes, when the temple (11) is open on the front (19), an abutment for an abutment surface (35) which is formed on said first hinge articulation element (13).

6. The elastic hinge according to one or more of the preceding claims, **characterized in that** said core (14) is inserted hot in said temple (11).

7. The elastic hinge according to one or more of claims 1 to 5, **characterized in that** said temple (11) is injected in a mold onto said core (14).

8. A hinge for eyeglasses, comprising
- a first hinge articulation element (13), to be fixed to the temple (11) of the eyeglasses
- a second hinge articulation element (18), to be fixed to the front (19) of the eyeglasses
**characterized in that** said second hinge articulation element (18) is of the type embedded in plastics and is constituted by a plate (29), from a first face (30) of which there protrudes at least one tab (31) for anchoring to the plastic material which forms the front (19) of the eyeglasses, at least one corresponding articulation head (27) further protruding from said first face (30) of said plate (29) and being hinged to the articulation head of said first hinge articulation element (13), the second face (32) of said plate (29), which lies opposite said first face (30), being directed outward with respect to the internal hinge angle formed by said plate (29) and by said first hinge articulation element (13), said second face (32) being arrangeable so that it is visible on said front (21) in order to allow any distinctive and/or decorative markings stamped or provided on said second face (32) to be visible.

9. The hinge according to claim 8, **characterized in that** the end edge (34) of said plate (29) related to the region from which said at least one corresponding articulation head (27) protrudes constitutes, when the temple (11) is open on the front (19), an abutment for an abutment surface (35), which is formed on said first hinge articulation element (13).
